(19) **Europäisches Patentamt / European Patent Office / Office européen des brevets**

(11) **EP 2 167 575 B1**

(12) # EUROPEAN PATENT SPECIFICATION

(45) Date of publication and mention
of the grant of the patent:
**18.11.2020 Bulletin 2020/47**

(21) Application number: **08784537.6**

(22) Date of filing: **24.06.2008**

(51) Int Cl.:
**C08K 7/02** *(2006.01)*     **F21V 7/22** *(2018.01)*

(86) International application number:
**PCT/EP2008/005070**

(87) International publication number:
**WO 2009/003608 (08.01.2009 Gazette 2009/02)**

(54) **IMPROVED MIRROR OPTIC SYTEM**

VERBESSERTES OPTISCHES SPIEGELSYSTEM

SYSTÈME OPTIQUE À MIROIR PERFECTIONNÉ

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **29.06.2007 EP 07012783**

(43) Date of publication of application:
**31.03.2010 Bulletin 2010/13**

(73) Proprietor: **DSM IP Assets B.V.**
**6411 TE Heerlen (NL)**

(72) Inventor: **FRISSEN, Richard, Jacques, Theodoor**
**NL-6171 WX Stein (NL)**

(74) Representative: **DSM Intellectual Property**
**P.O. Box 4**
**6100 AA Echt (NL)**

(56) References cited:
**EP-A- 0 095 120     EP-A- 0 764 692**
**EP-A- 0 861 871     US-A- 4 489 110**
**US-A- 4 983 660     US-A1- 2005 237 759**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to structural components for use in mirror optic systems. More particularly, the present invention relates to components comprising polyethylene terephthalate (PET) for use in advance automotive lighting systems.

Automotive lighting systems (ALS) are exposed to extreme environmental conditions including varying heat, humidity and vibrational conditions. Components for ALS comprising polymer compositions, such as polyphthalamide (PPA) and polyphenylene (PPS), have been increasing used to replace metal parts in such extreme environments. Due to the extremities of environmental conditions that ALS are exposed to, polymer based components were initially used for less critical parts, such as the casing. However, improved formulations have enabled polymer based components to be applied to more critical ALS applications, such as the bezel and the reflector.

The introduction of advanced automotive lighting systems (AALS), such as Adaptive Forward Lighting (AFL) and Dynamic Bending Light (DBL) have placed even higher performance demands on the materials used. In particular, AALS include a lamp holding frame, which enables the lamp to be swivelled from one position to another to enable the light emitted by the lamp to optimize the driver's road vision.

Scientific studies have shown that visual perception, with which we absorb 90 percent of all traffic relevant information, is reduced to as little as four percent when visibility is poor at night. AALS provide an added measure of safety in autumn and winter especially, when fewer daylight hours, late sunrise, early dusk and frequent rain and fog, create poor visibility. However, for the AALS to improve driver safety it is critical for the light beam to be free from vibrational instability which would distract the driver's attention. Just as importantly, it is critical for the light beam to be free from vibrational instability so that oncoming traffic is not exposed to excessive glare from fluttering headlights.

Compared to standard automotive lighting systems, AALS provides headlights that shine at an angle of up to +/- 15 degrees, depending on the steering angle and car speed. This enables the illumination of curves to be optimised. This not only contributes to increased safety and car control, but also enhances the dynamic driving characteristics of the car and ensures additional safety and comfort.

An important design parameter which needs to be satisfied in the design of AALS, is the dynamic stability of the projected light beam. Insufficient dynamic stability of components which make up the AALS may lead to large vibrational amplitudes, stemming from the operating frequency of the automotive engine, which result in the unsafe fluttering of the projected light.

An internal combustion engine has an operating range, for example, from 1000 to 4500 r.p.m. Within this range there is a corresponding range of firing induced, excitation frequencies. These excitation frequencies induce torsional vibrations on the vehicle's components, including the AALS. If a natural resonant frequency of the AALS is above the excitation frequencies of the engine within the normal operating speed range, large torsional amplitudes in the AALS will in general not occur. Alternatively, if a resonant frequency of the AALS is within the engine firing frequencies, large angular vibration amplitudes may arise.

To avoid the detrimental affects relating to AALS with poor dynamic stability, metal components have provided a solution. However, to reduce the weight and cost of the AALS, specialized polymeric compositions have been sought after. EP172685 discloses the use of sulfonic polyether (PES) reinforced with 20% by weight glass fibres. While PES has good stiffness and dimensional stability, PES's high cost and poor processability limit PES's attractiveness as a material for use in AALS.

The object of the present invention is to provide less expensive component for use in a mirror optic system which has sufficient dimensionally and vibrational stability to replace more expensively priced mirror optic system components of the prior art.

In a first embodiment of the present invention, there is provided an advanced automotive lightning system, the system comprising a lamp holding frame, which enables the lamp to be swivelled from one position to another, the system comprising a component being selected out of the group of lens frame, bezel for a headlight, reflector for a headlight, fog light housing, base or socket for a lamp and holding frame for a light source, characterized in that the component comprises a thermoplastic polyester composition comprising: (a) polyethylene terephthalate (PET); and (b) reinforcing fibres; wherein (a) + (b) accounts for at least 95 weight %, relative to the total weight of the composition, and wherein the plasticizer content of the composition is no more than 1 wt. %.

A component for the purposes of this invention is a shaped or moulded part.

The mirror optic system is preferably an ALS and more preferably an AALS, such as Adaptive Forward Lighting (AFL) or Dynamic Bending Light (DBL).

Substantially free of plasticizers for the purposes of this invention means a plasticizer content of no more than 1 weight % relative to the total weight of the composition. Preferably, the plasticizers content is no more than 0.5 weight % and more preferably no more than 0.25 weight % relative to the total weight of the composition. Most preferably, the composition contains no detectable levels of plasticizers.

It has been surprisingly found that the removal or substantial removal of plasticizers results in a component composition with excellent dimensional stability and vibrational stability at elevated temperatures. The addition of plasticizers to slow crystallizing polymers, such as PET, is known to promote crystallization due to an increase in polymer chain mobility. It is therefore unexpected that a composition substantially free of plasticizers would retain or even improve its already good mechanical properties.

The composition of the present invention may be advantageously used to produce components with sufficient vibrational stability and dimensional stability and sufficiently low volatile emissions to economically replace more expensive conventional materials used for mirror optic systems. In particular, the composition has been unexpectedly found to be suitable for use even in the most high performance AALS components comprising a movement mechanism such as a holding frame.

For the purposes of this invention, a component that comprises a movement mechanism, which enables moving or swivelling from a first position to a second position in a controlled manner, will also include a component or components which are attached or attachable thereto and move in accordance therewith. For example, a lens holder and cooling unit which are attached or attachable to a holding frame, which comprises a movement mechanism (or is attached to a movement mechanism), will also be considered to comprise a movement mechanism.

Components of the present invention which include or are designed to be attached to a movement mechanism are more susceptible to vibrational instability due to dimensional variations which leads to increased degrees of freedom for these components to move or vibrate in an uncontrolled manner.

The advantage of having a fibre reinforced PET composition substantially free of plasticizers is that the resulting component has improved dimensional stability. Improved dimensional stability enables components to operate over a wide range of temperatures, such as that of a headlight, with high dimensional accuracy. This is particularly important in components which are part of, or are connected to, a movement mechanism, such as a holding frame, socket holder, lens frame and/or cooling unit, as deterioration in dimensional tolerances lead to increased movement about the axis of movement and thus increased vibrational instability of the mirror optic system.

The reduced levels of plasticizers also beneficially leads to lower levels of volatile gases associated with the plasticizers being emitted from the composition. Advantageously, these improved properties are unexpectedly achieved while at least retaining the rigidity of the composition.

When applied to the fiber reinforced PET composition, preferred plasticizers are poly($C_2$-$C_4$)alkylene ether glycols of molecular weight at least 150 and derivatives thereof, particularly those of formula:

$$R^2\text{-O-M-}R^3$$

where $R^2$ and $R^3$ may be the same or different, and are selected from the group consisting of H, $C_1$-$C_{18}$ alkyl groups, and $C_7$-$C_{15}$ aralkyl groups, M being a poly($C_2$-$C_4$) alkyleneoxy radical.

An especially preferred poly($C_2$-$C_4$)alkylene ether glycol plasticizer of molecular weight at least 150 (sometimes referred to as polyalkylene glycol, or PAG) is generally polyethylene glycol (PEG), i.e., repeat units of M being -$CH_2CH_2$-O-, but polypropylene glycol (PPG) (M repeat units being -$CH(CH_3)CH$ -O-) and poly(tetramethylene ether) glycol (PTMEG) (M repeat units being -$CH$ $CH_2CH$ $CH_2$-O-), as well as block copolymers of these polyalkylene ether glycols for example, are also suitable poly($C_2$-$C_4$)alkylene ether glycols, and may be used with advantage instead of or in addition to PEG for certain applications. The molecular weight of the plasticizer should generally be at least 1000 and less than 6000.

Preferably, the composition has a dimensional stability, as defined by the coefficient of linear thermal expansion (CLTE) of no more than 60 x$10^{-6}$/°C, more preferably no more than 50 x$10^{-6}$/°C, more preferably no more than 40 x$10^{-6}$/°C and most preferably no more than 30 x$10^{-6}$/°C. These preferred parameters are based upon the CLTE of samples taken at positions parallel to the flow of the injected moulded samples. The CLTE of the taken at in the normal direction or cross flow direction is preferably no more than 20 x$10^{-6}$/°C, more preferably no more than 18 x$10^{-6}$/°C and most preferably no more than 15 x$10^{-6}$/°C. CLTE is measured according to ISO 11359-1/2.

The rigidity of the composition is also important to maintaining the vibrational stability of the optic mirror system during operation, which is typically from -40°C to 180°C. Vibration theory dictates that the ratio of the rigidity of the composition, expressed as the tensile modulus, to the density of the composition is a function of the eigen frequency. The eigen frequency of a system is the frequency at which the system tends to oscillate at maximum amplitude.

The eigen frequency ($f$) of a component is defined as:

$$f = 0.5/\pi \times (k / m_{eff})^{0.5}$$

where k is the spring constant and $m_{eff}$ is the effective mass of the component.

The spring constant k is dependent upon the geometry of the component. For example, k for a cantilevered beam with a uniform cross section is given by:

$$k = 3\,E\,I\,/\,l^3$$

Where E is the tensile modulus or Young's modulus, I is the moment of inertia and l is the length of the beam. For a beam with a cross section with a width b (perpendicular to the deflection) and a height h, I is given by:

$$I = b\,h^3\,/\,12$$

As $m_{eff}$ is directly proportional to the density $\rho$ multiplied by the volume of the component (*lbh*), then the eigen frequency of the component may be expressed as being directly proportional to the square root of the ratio of the tensile modulus to the density of the component:

$$f \propto (E/\rho)^{0.5}$$

Preferably, the composition has a tensile modulus to density ratio at 180°C of at least $0.5 \times 10^9$ Pa.cm$^3$/g, more preferably at least $1.0 \times 10^9$ Pa.cm$^3$/g, more preferably at least $2.0 \times 10^9$ Pa.cm$^3$/g and most preferably at least $3.0 \times 10^9$ Pa.cm$^3$/g.

Herein the tensile modulus is determined according to ISO 527-1/2 and the density is determined according to ISO 1183.

The advantage of a higher ratio of E / $\rho$ at 180 °C is that the mirror optic system component will have a higher eigen frequency and hence will be less prone to high amplitude vibrations (under elevated temperature) when exposed to high frequency vibrations of a combustion engine or the like. An increased E / $\rho$ ratio also provides greater geometrical design options of the component. In particular, an increased E / $\rho$ enables the wall thickness of the component to be reduced. Consequently, the component's weight and manufacturing costs are reduced and, if the mirror optic system is part of a vehicle, the fuel efficiency is improved.

The higher the tensile modulus to density ratio (E/$\rho$) the higher the eigen or resonance frequency of the component. Therefore, in applications such as ALS, a high E/$\rho$ is critical to avoid vibrational fluttering of headlights. The importance of a high E/$\rho$ is even more critical in AALS in which the holding frames swivel as a vehicle maneuvers around curved roads. The movement mechanism which enables the holding frames to move or swivel in a controlled manner is more susceptible to vibrational instability. This is at least partly due to the relatively high length to width ratio of the segments which typically make up the holding frame component, which results in a relatively low spring constant k compared to other mirror optic system components.

In a special embodiment of the present invention, there is provided a mirror optic system component, characterized in that the component comprises a thermoplastic polyester composition consisting of:

(a) 50-70 weight % polyethylene terephthalate (PET);
(b) 30- 50 weight % reinforcing fibres; and
(c) 0-2 weight % additives,

wherein the composition is substantially free of plasticizers.

It has been found that the above composition provides a good balance between mechanical properties including stiffness and dimensional stability.

The present invention advantageous addresses these problems by providing a polyester composition with improved vibrational and dimensional stability at elevated temperatures compared to similarly priced conventional materials used for such applications.

The use of a component formulation substantially free of plasticizers also contributes to the reduction in volatilization of gases from the components also helps prevent detrimental fogging of the optical mirror system. Fogging occurs when volatile compounds (including absorbed moisture), originating from the plastic composition and volatilized by the heating of a light source under operating conditions, deposit on cooler regions of the optic mirror system, such as the lens of the headlight.

Preferably, the composition has a low emission of volatile organic compounds, hereafter also referred to as VOC. The composition preferably has a VOC of no more than 0.3 weight %, more preferably 0.2 weight % and most preferably 0.1 weight_%, relative to the weight of the PET.

The composition preferably has a low moisture absorption rate. The absorption of water at ambient conditions, when the light source in not activated, results in the generation of water vapour, when the light source is activated, which may condense on the cooler regions of the mirror optic system, such as the lens. The composition preferably has a moisture (humidity) absorption rate of no more than 0.10 weight %, preferably no more than 0.15 weight% and most preferably no more than 0.25 weight % relative to the total weight of the composition. Herein the moisture (humidity) absorption rate is determined in accordance with ISO 62.

The fibre reinforced PET composition preferably comprises PET in a range of 40 weight % to 90 weight % relative to the total weight of the composition and reinforcing fibres in the range of 10 weight % to 60 weight % relative to the total weight of the composition.

The advantage hereof is a more balanced compromise between high strength and stiffness, a low relative density and easy processing behaviour of the polyethylene terephthalate composition. In relation to the upper weight limit of reinforcing fibres, it has been also found that elevated levels of VOC are produced which may not be suitable for all mirror optic system applications.

The combined PET and reinforcing fibres content (a) + (b) is at least 95 weight % relative to the total weight of the component, preferably at least 98 weight %, even more preferably at least 99 weight % and most preferably at least 99.5 weight %.

It is been found that a component consisting essentially of PET and reinforcing fibres, with minimal additives, provides a good balance between functional performance (eg. low VOC, sufficient dimensional stability and sufficient E / $\rho$) and cost.

The reinforcing fibres may include any of the known reinforcing fibres suitable for such an application, including glass fibres, carbon fibres, aramid fibres and/or nanofillers. Preferably, the reinforcing fibres are glass fibres due to their good balance between functional performance and cost.

Suitable glass fibres for use as reinforcing fibres in the polyethylene terephthalate composition that is used in the process according to the invention generally have a fibre diameter of from 5 to 20 $\mu$m, preferably 8-15 $\mu$m, and most preferably 9-11 $\mu$m for optimal balance of mechanical properties, like stiffness, strength and toughness, and processability. The glass fibres have a sizing on their surface that is compatible with thermoplastic polyesters and generally contains an epoxy-or aminofunctional compound. In a preferably aspect of the present invention, the glass fibres are hollow, thereby decreasing the density of the glass fibres and thus contributing to a higher E / $\rho$ value.

In general, the higher the required eigen frequency of a component, the higher content of reinforcing fibres in the composition. For instance, the proportion of reinforcing fibres for a component comprising a movement mechanism, or attached thereto, is preferably between 30 weight % to 60 weight % and more preferably between 45 weight % to 55 weight % relative to the total weight of the composition.

In the context of the present invention polyethylene terephthalate resin is understood to be the condensation product of ethanediol and terephthalic acid. Such a PET resin is obtainable by direct esterification of ethanediol and terephthalic acid or by transesterification of ethanediol with the dimethyl ester of terephthalic acid, thus comprising the esterified residues of ethanediol and terephthalic acid.

The polyethylene terephthalate composition that is used in the process according to the invention contains as a matrix polymer a polyethylene terephthalate polymer, i. e. a polyester based on terephthalic acid or an ester thereof and ethylene glycol as main monomers. The polyethylene terephthalate can also contain small amounts of other diacids, like isophtalic acid, or other diols, like diethylene glycol as comonomers. Preferably the composition contains at least a polyethylene terephthalate homopolymer. A polyethylene terephthalate homopolymer is herein understood to contain less than 5 mole% of monomers other than terephthalic acid or an ester thereof and ethylene glycol. The advantage of such a homopolymer is a higher melting point and better crystallisation behaviour. More preferably the polyethylene terephthalate contains less than 4 mol%, even more preferably less than 3 mol% and most preferably less than 2 mol% of comonomer.

Preferably at least 50 weight % of polyethylene terephthalate in the composition is a homopolymer, most preferably at least 75 weight %. The composition may further contain a polyethylene terephthalate copolymer containing more than 5 mole% of other monomers, like the type of polymer used for making bottles. Such polymers may be used as virgin grades, but also as recycled grades, that is material recovered from post-use products, e. g. soft-drink bottles.

Preferably, there is a standard deviation of not more than 0.6 % in the reinforced fiber content between different lots or batches of fiber reinforced PET, and thus also between different parts moulded from these compositions. Typical lot sizes as produced are from about 5000 to 25000 kg. Preferably the standard deviation of the reinforced fiber content between batches is not more than 0.5 %, more preferably not more than 0.4 %, and most preferably not more than 0.3 %.

The inventors found that when a fiber reinforced PET composition with such narrow distributions in the reinforcing fibres (eg. glass fibres) content is used, a very good performance in dimensional tolerances of optical mirror system components is obtained. In addition to enabling a constant and reproducible relative density of the composition and components moulded thereof, little variation in reinforcing fibres content probably also results in little fluctuation in melt viscosity of the composition, and thus in a very stable injection moulding process, i. e. in little fluctuations in pressures, temperatures etc. This is not only advantageous for minimising degradation of the polyethylene terephthalate composition during the moulding process, but also for controlling crystallinity, density, dimensions and residual stresses of the moulded component obtained.

Suitable additives that may be used in the composition in accordance to the presence invention include nucleating agents, impact modifier, plasticiser, lubricating or mould release agents and colorants, such as titanium dioxide and carbon black. For the purposes of the present invention, additives include all components of the PET composition, excluding the PET and reinforcing fibre components.

Preferably, additives which contribute to volatile emissions from the composition during use are minimized or avoided all together. Preferably, the total amount of additives represent no more than 2 % by weight of the composition, preferably no more than 1 % by weight of the composition and most preferably no more than 0.5% by weight of the composition.

The advantage of having a low additive content is that the functionality of the composition is more likely to remain stable, with the migration, volatilization and decomposition of additives tending to increase with increasing temperatures.

The advantage of the composition having a lower wt% of lubricant or mould release agent is an even better fogging behaviour. In a preferred embodiment of the invention, the composition has a lubricant or mould release agent with a weight loss factor of at most 1 wt.%, more preferably at most 0.5 wt.%, and even more preferably at most 0.2 wt.%, relative to the weight of the lubricant. The weight loss factor is defined as the weight loss, relative to the initial weight, determined by isothermal thermogravimetric analysis (TGA) at 160°C under nitrogen after 4 hours. It has been found, that despite the low amount of lubricant generally used in the composition, a lubricant with a low weight loss factor can be critical for the fogging behaviour of the compound, and that the fogging behaviour can be further improved by using a lubricant with a lower weight loss factor.

Nucleating agents are considered herein as additives that enhance the crystallization rate of PET. The crystallisation rate can be measured by standard methods such as differential scanning calorimetry (DSC). Preferably, an inorganic additive like micro-talcum, or a metal- carboxylate, especially an alkalimetal-carboxylate like sodium benzoate is used. More preferably, an alkalimetal-carboxylate like sodium benzoate is used.

Preferably, the composition according to the invention has at most 2 weight %, more preferably at most 1 weight %, still more preferably at most 0.5 weight %, relative to the total weight of the composition, of nucleating agent. Most preferably the composition according to the invention has less than 0.1 weight % nucleating agent relative to the total weight of the composition, or does not have any nucleating agent at all.

Preferably, the additive in the composition, when present in the composition in the form of discrete solid particles, has an average particle size of less then 10 $\mu$m, more preferably less than 2 $\mu$m, even more preferably less than 1 $\mu$m and most preferably less than 0.5 $\mu$m. The particle size may be as low as 10 A, or even lower, as can be the case with nano-fillers. The advantage of the composition according to the invention comprising an additive with a smaller particle size is that it can be used for preparing moulded parts with a higher surface gloss. For applications requiring very high gloss surfaces, the composition according to the invention preferably does not comprise any additive in the form of discrete particles.

The polyester composition according to the invention comprising a PET and a reinforcing agent can be obtained by mixing or blending the various components applying known techniques. This mixing may be a 'dry' blending operation, wherein the various components are mixed below the melt/processing temperatures of the PET, or a melt blending process wherein the components, optionally pre/blended, are mixed at suitable melt/processing temperatures, e.g. in a single/ or twin/screw extruder. Also a combination of dry/ and melt/blending can be applied.

The mirror optic system of the present invention includes components of an automotive lighting system (ALS), such as a lens frame, bezel for a headlight, a reflector for a headlight, fog light housing or a base or socket for a lamp. More preferably, the component is part of an advanced automotive lighting system (AALS). Most preferably, the component is an AALS component comprising a movement mechanism (or attached to a movement mechanism), such as a holding frame for a light source (eg. headlight or fog light) which enables moving or swivelling between at least two positions in a controlled manner. For example, the holding frame enables the light source to swivel or move through an arc of rotation of preferably at least ± 5 degrees, more preferably at least ± 10 degrees, and most preferably at least ± 15 degrees. The greater the arc of movement that the holding frame achieves while maintaining vibrational stability, the greater the applications that the holding frames will find within an AALS.

In a preferred aspect of the present invention, the component is a cooling fan. The cooling fan may be used to stabilize the temperature of the light source, in particular LED light sources, and is becoming an increasingly common component of ALS and AALS alike. As the cooling fan contains a movement mechanism which is also a vibration source (i.e. rotation of fan blades around a central axis), it is desirable that the cooling fan has excellent dimensional stability and a high E/p value, such that vibrational instability is avoided. The tight clearance between the fan blades and the fan housing means than the dimensional stability must be high to ensure vibrations do not originate from the fan blades contacting the fan housing. When the cooling fan is attached to the holding frame of the light source, which also has a movement mechanism, there is even greater risk of vibrational instability.

The mirror optic system may further comprise a movement mechanism which enables moving or swivelling of the at least one component from a first position to a second position in a controlled manner. The movement mechanism may be an integral element of a component or separate element attached to a component of the present invention.

In another embodiment of the present invention, there is provided an assembly comprising a vibration source and a mirror optic system comprising at least one component characterized in that the at least one component comprises a thermoplastic polyester composition comprising:

(a) polyethylene terephthalate (PET); and
(b) reinforcing fibres;

wherein (a) + (b) accounts for at least 95 weight %, relative to the total weight of the composition, and wherein the composition is substantially free of plasticizers.

Preferably, the optic mirror system has an eigen frequency greater than the resonance frequency of the vibration source.

The assembly is generally a vehicle and the vibrational source is typically an internal combustion engine. Alternatively, the vibration source may be a cooling fan component of an ALS and thus forms part of the mirror optic system.

A typical resonance frequency in a contemporary automotive transmission is approximately 60 to 70 Hz (at 1,000 rpm - 1,500 rpm). As the eigen frequency is also dependent upon the geometry of the part, the higher the tensile modulus to density ratio, the greater design flexibility afforded to the component without impacting eigen frequency design constraints.

Preferably, the mirror optic system has an eigen frequency of greater than 60 Hz, more preferably greater than 65 Hz and most preferably greater than 70 Hz.

The invention also relates to the use of a mirror optic system, as previously described, in a vehicle, such as a truck, a passenger's car or a motorbike.

The advantage of a vehicle comprising a mirror optic system, such as a headlight, according the invention is that during the life time of the vehicle, greater light beam stability of the headlight occurs. As a result of which the vibrational stability the light is better retained and the road-users remain better secured, compared to a vehicle comprising a headlight made of comparably priced polymer compositions which have lower vibrational stability.

Example

Materials

The composition of Example 1 (E-1) consisted a nucleated PET composition from DSM Engineering Plastics (NL) reinforced with 30 wt.% glass fibres of 10 $\mu$m diameter with a total additive content of about 0.5 wt% (mould release agent + nucleating agent) and containing no plasticiser.

The composition of Comparative experiment A (CE-A) consisted of glass reinforced PET available under the trademark Rynite™ 530. Rynite™ 530 was determined to have 1.7 wt.% plasticisers, 30 wt.% glass fibres of 10 $\mu$m diameter and 5.9 wt% other additives.

Table 1. PET compositions (wt.%)

| Sample | PET | Glass Fibre | Plasticizer | Other additives |
|--------|------|-------------|-------------|-----------------|
| E-1 | 69.5 | 30 | 0 | 0.5 |
| CE-A | 62.4 | 30 | 1.7 | 5.9 |

Test bars were prepared from the samples using an injection moulding machine with a mould temperature of 140°C and with temperature setting along injection moulder (from hopper to nozzle) varying between 280 to 285°C.

Test methods

Coefficient of Linear Thermal Expansion (CLTE) was determined on test bars of dimensions 65 mm X 65 mm X 3.2 mm in accordance with ISO 11359-1/2 at 180°C in the parallel and normal direction to polymer flow.

Tensile modulus was determined in accordance with ISO 527-1/-2.

Table 2. Dimensional stability and tensile modulus of PET compositions @ 180°C.

| | Plasticiser content | CLTE (normal) | CLTE (parallel) | Tensile modulus (E) | E/$\rho$ at 180 °C |
|-----|---------------------|----------------|------------------|----------------------|---------------------|
| E-1 | 0.0% | 51x10$^{-6}$°C | 15x10$^{-6}$°C | 2.6x10$^9$ Pa | 1.6x10$^9$Pa.cm$^3$/g |

(continued)

|  | Plasticiser content | CLTE (normal) | CLTE (parallel) | Tensile modulus (E) | E/$\rho$ at 180 °C |
|---|---|---|---|---|---|
| CE-A | 1.7 % | $61 \times 10^{-6}$/°C | $21 \times 10^{-6}$/°C | $2.1 \times 10^9$ Pa | $1.3 \times 10^9$ Pa.cm$^3$/g |

The results in Table 2 illustrate that the PET composition with no added plasticiser possesses improved CLTE and a higher E / p at 180 °C compared to comparative experiment A.

Lighting frames for AALS were injected moulded from the composition of example 1 and comparative experiment A. When tested against industry standard test protocols, the lighting frame produced from the composition of example 1 was found to have improved vibrational stability and a lower formation of volatile condensation products on the reflector surface (lower % loss of reflection) within the optical lighting system.

## Claims

1. An advanced automotive lightning system, the system comprising a lamp holding frame, which enables the lamp to be swivelled from one position to another, the system comprising a component being selected out of the group of lens frame, bezel for a headlight, reflector for a headlight, fog light housing, base or socket for a lamp and holding frame for a light source, **characterized in that** the component comprises a thermoplastic polyester composition comprising:

   (a) polyethylene terephthalate (PET); and
   (b) reinforcing fibres;

   wherein (a) + (b) accounts for at least 95 weight %, relative to the total weight of the composition, and wherein the plasticizer content of the composition is no more than 1 wt. %.

2. The advanced automotive lightning system according to claim 1, wherein the plasticizer content of the composition is no more than 0.5 wt%.

3. The advanced automotive lightning system according to claim 1 or 2, wherein the plasticizer is a poly($C_2$-$C_4$) alkylene ether glycols of molecular weight at least 150 and derivatives thereof.

4. The advanced automotive lightning system according to claim 3, wherein the poly($C_2$-$C_4$) alkylene ether glycols of molecular weight at least 150 is of formula:

   $$R^2\text{-O-M-}R^3$$

   where $R^2$ and $R^3$ may be the same or different, and are selected from the group consisting of H, C1-C18 alkyl groups, and $C_7$-$C_{15}$ aralkyl groups, M being a poly($C_2$-$C_4$) alkyleneoxy radical.

5. The advanced automotive lightning system according to claim 1, wherein the composition comprises at most 2 weight %, relative to the total weight of the composition, of one or more additives.

6. The advanced automotive lightning system according to any one of the preceding claims, wherein the component is an advanced automotive lighting system holding frame.

7. The advanced automotive lightning system according to any one of the preceding claims, wherein the composition has no more than 0.3 weight % volatile organic compounds (VOC) relative to the weight of PET.

8. The advanced automotive lightning system according to any one of the preceding claims, the system comprising a lamp holding frame, which enables the lamp to be swivelled from one position to another, **characterized in that** the component comprises a thermoplastic polyester composition consisting of:

   (a) 50-70 weight % polyethylene terephthalate (PET);
   (b) 30- 50 weight % reinforcing fibres; and
   (c) 0-2 weight % additives,

wherein the composition comprises no more than 1 wt. % of plasticizers.

9. The advanced automotive lightning system according to claim 8, wherein the composition is substantially free of plasticizers.

10. The advanced automotive lightning system according to any one of the preceding claims, wherein the composition has a coefficient of linear thermal expansion (CLTE) no more than $30 \times 10^{-6}/°C$, as measured on samples taken at positions parallel to the flow of the injected moulded samples and wherein CLTE is measured according to ISO 11359-1/2.

11. The advanced automotive lightning system according to any one of the preceding claims, comprising an optic mirror system having an eigen frequency greater than 60Hz.

12. The advanced automotive lightning system according to any one of the preceding claims, wherein the reinforcing fibres include glass fibres, carbon fibres, aramid fibres.

13. The advanced automotive lightning system according to any one of the preceding claims, wherein the reinforcing fibres are glass fibres.

14. The advanced automotive lightning system according to claim 13, wherein the glass fibres have a fibre diameter of 9 - 11 micrometer.

## Patentansprüche

1. Fortschrittliches Kraftfahrzeugbeleuchtungssystem, wobei das System einen Lampenhalterahmen umfasst, der es ermöglicht, dass die Lampe von einer Position zu einer weiteren geschwenkt werden kann, wobei das System eine Komponente umfasst, die ausgewählt ist aus der Gruppe Linsenfassung, Blende für einen Frontscheinwerfer, Reflektor für einen Frontscheinwerfer, Nebelscheinwerfergehäuse, Sockel oder Fassung für eine Lampe und Halterahmen für eine Lichtquelle, **dadurch gekennzeichnet, dass** die Komponente eine thermoplastische Polyesterzusammensetzung umfasst, umfassend:

(a) Polyethylenterephthalat (PET); und
(b) Verstärkungsfasern;

wobei (a) + (b) mindestens 95 Gew.-%, bezogen auf das Gesamtgewicht der Zusammensetzung, ausmachen und wobei der Weichmachergehalt der Zusammensetzung nicht mehr als 1 Gew.% ausmacht.

2. Fortschrittliches Kraftfahrzeugbeleuchtungssystem nach Anspruch 1, wobei der Weichmachergehalt der Zusammensetzung nicht mehr als 0,5 Gew.-% ausmacht.

3. Fortschrittliches Kraftfahrzeugbeleuchtungssystem nach Anspruch 1 oder 2, wobei es sich bei dem Weichmacher um Poly($C_2$-$C_4$)alkylenetherglykole mit einem Molekulargewicht von mindestens 150 und Derivate davon handelt.

4. Fortschrittliches Kraftfahrzeugbeleuchtungssystem nach Anspruch 3, wobei die Poly($C_2$-$C_4$)alkylenetherglykole mit einem Molekulargewicht von mindestens 150 die Formel:

$$R^2O\text{-}M\text{-}R^3$$

haben,
wobei $R^2$ und $R^3$ gleich oder verschieden sein können und ausgewählt sind aus der Gruppe bestehend aus H-, $C_1$-$C_{18}$-Alkylgruppen und $C_7$-$C_{15}$-Aralkylgruppen, wobei M ein Poly($C_2$-$C_4$)alkylenoxyradikal ist.

5. Fortschrittliches Kraftfahrzeugbeleuchtungssystem nach Anspruch 1, wobei die Zusammensetzung höchstens 2 Gew.-%, bezogen auf das Gesamtgewicht der Zusammensetzung, eines oder mehrerer Additive umfasst.

6. Fortschrittliches Kraftfahrzeugbeleuchtungssystem nach einem der vorhergehenden Ansprüche, wobei die Komponente ein Halterahmen für ein fortschrittliches Kraftfahrzeugbeleuchtungssystem ist.

7. Fortschrittliches Kraftfahrzeugbeleuchtungssystem nach einem der vorhergehenden Ansprüche, wobei die Zusammensetzung nicht mehr als 0,3 Gew.-% flüchtige organische Verbindungen (VOC), bezogen auf das Gewicht von PET, aufweist.

8. Fortschrittliches Kraftfahrzeugbeleuchtungssystem nach einem der vorhergehenden Ansprüche, wobei das System einen Lampenhalterahmen umfasst, der es ermöglicht, dass die Lampe von einer Position zu einer weiteren geschwenkt werden kann, **dadurch gekennzeichnet, dass** die Komponente eine thermoplastische Polyesterzusammensetzung umfasst, bestehend aus:

(a) 50-70 Gew.-% Polyethylenterephthalat (PET);
(b) 30 bis 50 Gew.-% Verstärkungsfasern; und
(c) 0 bis 2 Gew.-% Additiven,

wobei die Zusammensetzung nicht mehr als 1 Gew.-% Weichmacher umfasst.

9. Fortschrittliches Kraftfahrzeugbeleuchtungssystem nach Anspruch 8, wobei die Zusammensetzung im Wesentlichen frei von Weichmachern ist.

10. Fortschrittliches Kraftfahrzeugbeleuchtungssystem nach einem der vorhergehenden Ansprüche, wobei die Zusammensetzung einen linearen Wärmeausdehnungskoeffizienten (CLTE) von nicht mehr als $30 \times 10^{-6}/°C$ aufweist, gemessen an Proben, die an Positionen parallel zu dem Fluss der spritzgegossenen Proben entnommen wurden und wobei CLTE gemäß ISO 11359-1/2 gemessen wird.

11. Fortschrittliches Kraftfahrzeugbeleuchtungssystem nach einem der vorhergehenden Ansprüche, umfassend ein Spiegeloptiksystem mit einer Eigenfrequenz von mehr als 60 Hz.

12. Fortschrittliches Kraftfahrzeugbeleuchtungssystem nach einem der vorhergehenden Ansprüche, wobei die Verstärkungsfasern Glasfasern, Kohlefasern, Aramidfasern umfassen.

13. Fortschrittliches Kraftfahrzeugbeleuchtungssystem nach einem der vorhergehenden Ansprüche, wobei die Verstärkungsfasern Glasfasern sind.

14. Fortschrittliches Kraftfahrzeugbeleuchtungssystem nach Anspruch 13, wobei die Glasfasern einen Faserdurchmesser von 9 bis 11 Mikrometer aufweisen.

**Revendications**

1. Système d'éclairage d'automobile avancé, le système comprenant un cadre de support de lampe, qui permet de faire pivoter la lampe d'une position à une autre, le système comprenant un composant étant choisi dans le groupe d'un cadre de lentille, un cadran pour un phare, un réflecteur pour un phare, un boîtier de phare antibrouillard, une base ou un réceptacle pour une lampe et un cadre de support pour une source de lumière, **caractérisé en ce que** le composant comprend une composition de polyester thermoplastique comprenant :

(a) du poly(téréphtalate d'éthylène) (PET) ; et
(b) des fibres de renforcement ;

dans lequel (a) + (b) représente au moins 95 % en poids, par rapport au poids total de la composition, et dans lequel la teneur en plastifiant de la composition n'est pas supérieure à 1 % en poids.

2. Système d'éclairage d'automobile avancé selon la revendication 1, dans lequel la teneur en plastifiant de la composition est supérieure à 0,5 % en poids.

3. Système d'éclairage d'automobile avancé selon la revendication 1 ou 2, dans lequel le plastifiant est un poly(éther glycol d'alkylène en $C_2$-$C_4$) de poids moléculaire d'au moins 150 et des dérivés de celui-ci.

4. Système d'éclairage d'automobile avancé selon la revendication 3, dans lequel le poly(éther glycol d'alkylène en $C_2$-$C_4$) de poids moléculaire d'au moins 150 est de formule :

$$R^2O\text{-}M\text{-}R^3$$

où $R^2$ et $R^3$ peuvent être identiques ou différents, et sont choisis dans le groupe constitué de H, groupes alkyle en $C_1\text{-}C_{18}$, et groupes aralkyle en $C_7\text{-}C_{15}$, M étant un radical poly(alkylénoxy en $C_2\text{-}C_4$).

5. Système d'éclairage d'automobile avancé selon la revendication 1, dans lequel la composition comprend au plus 2 % en poids, par rapport au poids total de la composition, d'un ou plusieurs additifs.

6. Système d'éclairage d'automobile avancé selon l'une quelconque des revendications précédentes, dans lequel le composant est un cadre de support de système d'éclairage d'automobile avancé.

7. Système d'éclairage d'automobile avancé selon l'une quelconque des revendications précédentes, dans lequel la composition ne comporte pas plus de 0,3 % en poids de composés organiques volatils (COV) par rapport au poids de PET.

8. Système d'éclairage d'automobile avancé selon l'une quelconque des revendications précédentes, le système comprenant un cadre de support de lampe, qui permet de faire pivoter la lampe d'une position à une autre, **caractérisé en ce que** le composant comprend une composition de polyester thermoplastique constituée de :

   (a) 50 à 70 % en poids de poly(téréphtalate d'éthylène) (PET) ;
   (b) 30 à 50 % en poids de fibres de renforcement ; et
   (c) 0 à 2 % en poids d'additifs,

   dans lequel la composition ne comprend pas plus de 1 % en poids de plastifiants.

9. Système d'éclairage d'automobile avancé selon la revendication 8, dans lequel la composition est sensiblement exempte de plastifiants.

10. Système d'éclairage d'automobile avancé selon l'une quelconque des revendications précédentes, dans lequel la composition a un coefficient de dilatation thermique linéaire (CLTE) de pas plus de $30 \times 10^{-6}$/°C, tel que mesuré sur des échantillons prélevés à des positions parallèles à l'échantillon des échantillons moulés injectés et dans lequel le CLTE est mesuré selon ISO 11359-1/2.

11. Système d'éclairage d'automobile avancé selon l'une quelconque des revendications précédentes, comprenant un système de miroir optique ayant une fréquence propre supérieure à 60 Hz.

12. Système d'éclairage d'automobile avancé selon l'une quelconque des revendications précédentes, dans lequel les fibres de renforcement comprennent des fibres de verre, des fibres de carbone, des fibres d'aramide.

13. Système d'éclairage d'automobile avancé selon l'une quelconque des revendications précédentes, dans lequel les fibres de renforcement sont des fibres de verre.

14. Système d'éclairage d'automobile avancé selon la revendication 13, dans lequel les fibres de verre ont un diamètre de fibre de 9 à 11 micromètres.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 172685 A